# EUROPÄISCHE PATENTSCHRIFT

(11) **EP 1 682 305 B1**
(45) Veröffentlichungstag und Bekanntmachung des Hinweises auf die Patenterteilung: **02.06.2010**
(21) Anmeldenummer: 04761948.1
(22) Anmeldetag: 01.10.2004
(51) Int. Cl.: B23K 11/30, B23K 11/06, B21D 51/26

(54) **ROLLENNAHTSCHWEISSMASCHINEN UND VERFAHREN ZUM ROLLENNAHTSCHWEISSEN VON BLECHZYLINDERN MIT EINER FLACHGEWALZTEN DRAHTELEKTRODE**
ROLL SEAM WELDING MACHINES AND METHOD FOR ROLL SEAM WELDING SHEET METAL CYLINDERS WITH A FLAT ROLLED WIRE ELECTRODE
MACHINES DE SOUDAGE A LA MOLETTE ET PROCEDE DE SOUDAGE A LA MOLETTE DE CYLINDRES DE TOLE AVEC UN FIL-ELECTRODE LAMINE AU ROULEAU

(30) Priorität: 09.10.2003 CH 172703
(43) Veröffentlichungstag der Anmeldung: 26.07.2006
(73) Patentinhaber: Can Man, 5705 Hallwil (CH)
(72) Erfinder: UMBRICHT, Ruedi, CH-5722 Gränichen (CH)
(74) Vertreter: Gachnang, Hans Rudolf
(86) Internationale Anmeldenummer: PCT/CH2004/000608
(87) Internationale Veröffentlichungsnummer: WO 2005/032753

(56) Entgegenhaltungen:
- GB-A- 760 839
- US-A- 1 511 849
- US-A- 4 572 937
- PATENT ABSTRACTS OF JAPAN Bd. 199, Nr. 912, 29. Oktober 1999 (1999-10-29) & JP 11 188485 A (NKK CORP), 13. Juli 1999 (1999-07-13)
- PATENT ABSTRACTS OF JAPAN Bd. 200, Nr. 202, 29. Februar 2000 (2000-02-29) & JP 11 320175 A (KAWASAKI STEEL CONTAINER CO LTD), 24. November 1999 (1999-11-24)
- PATENT ABSTRACTS OF JAPAN Bd. 009, Nr. 055 (M-362), 9. März 1985 (1985-03-09) & JP 59 189080 A (DAIWA CAN CO LTD), 26. Oktober 1984 (1984-10-26)

## Beschreibung

Gegenstand der Erfindung ist eine Rollennaht-Schweissmaschine gemäss den Oberbegriffen der Patentansprüche 1 und 3 (siehe, : z.B., JP 11/188 485 A)

Gegenstand der Erfindung ist weiter ein Verfahren zum Rollennaht-Schweissen von Blechzylindern gemäss Oberbegriff des Patentanspruchs. 4 (siehe, : z.B., JP 11/188 485 A).

Die Herstellung von längsnahtgeschweissten Konserven-, Geträrke-, Aerosol- und Lackdosen auf Längsnahtschweissmaschinen mit einem Elektrodenrollenpaar, über das eine drahtförmige Zwischenelektrode geführt wird, ist seit vielen Jahren bekannt. Die Zwischenelektrode, üblicherweise ein Kupferdraht, welcher in einer peripher auf der Elektrodenrolle angebrachten Nut seitlich geführt wird, sichert eine weitestgehenden konstanten Übergangswiderstand zwischen den Elektrodenrollen und dem Schweissgut, d.h. die drahtförmige Zwischenelektrode verhindert das Amalgrieren von Zinn, Zink und anderen Überzugsmetallen des Schweissgutes an den Oberflächen der Elektrodenrollen. Die Zwischenelektroden, welche den direkten Kontakt des Schweissguts mit der Elektrodenrollenoberfläche verhindern, schützen letztere aber auch vor mechanischen Verformungen durch den dauernden Kontakt mit den längsverlaufenden Kanten der Blechzargen.

Insbesondere bei der Massenherstellung von Konserven- und Getränkedosen stellt der Preis für die verlorene, da üblicherweise nur einmal benutzbare Zwischenelektrode einen nicht unerheblichen Anteil der Produktionskosten dar. Wohl kann der einmal oder heute dank einer mechanischen Zwischenreinigung auch mehrere Male benutzbare, die Zwischenelektrode bildende Draht einer 100%-igen Wiederverwertung zugeführt werden. Dennoch sind die Kosten für die Wiederaufbereitung pro Laufmeter Schweissnaht sehr hoch und können bei einer schnelllaufenden Produktionsmaschine, d.h. einer Schweissmaschine auf der beispielsweise 500 - 600 Dosenrümpfe pro Minute hergestellt werden, ohne weiteres EURO 1'000.00 pro Tag betragen. Eine gewisse Reduktion dieser Kosten kann, wie bereits erwähnt, durch mehrmalige Verwendung des Drahts durch eine Zwischenreinigung desselben erreicht werden. Betreiber von Hochleistungs-Schweissmaschinen ziehen es allerdings vor, den Draht nur einmal durch die Schweissmaschine hindurchzuführen, um Drahtbrüche infolge des nach mehrmaligem Gebrauchs in dessen Härte und Beschaffenheit nicht mehr homogenen Drahtmaterials einen Unterbruch der gesamten Produktionsanlage auf ein Minimum zu reduzieren. Die als Runddrähte angelieferten Zwischenelektroden werden für die sogenannten Quetschnahtschweissungen auf der Schweissmaschine etwas flachgewalzt, so dass sie zwei ebene, einander parallel gegenüberliegende sehnenartige Kontaktflächen bilden und seitlich noch die bombierten Ränder aufweisen. Das Breiten-/Dickenverhältnis beträgt heute ca. 2 bis max. 4. In den Peripherien der Elektrodenrollen sind entsprechend geformte und dimensionierte Nuten eingelassen, welche die Führung der Zwischenelektroden übernehmen. Eine der sehnenartigen Kontaktflächen liegt am Grund der Nut auf; die bombierten Ränder werden während des Schweissens auf der Elektrodenrolle seitlich durch die Nutwände geführt. Die in Kontakt mit dem Werkstück gelangenden Kontaktflächen des Drahtes liegen direkt über und unter den Kanten des Blechzuschnittes, um durch hohen Druck und die durch den Schweissstrom erzeugte Wärme eine Zerquetschung und Verschweissung des überlappten Bereiches zu erlangen. Um dies zu erreichen, muss der gesamte Strom durch die Zwischenelektroden und durch den Überlappungsbereich der Blechkanten fliessen. Ein Nebenschluss führt unmittelbar zu einer Qualitätseinbusse oder Fehlschweissung.

Beim Schweissen von Dosen mit geringem Durchmesser, beispielsweise Aerosoldosen mit 45 - 65 mm Durchmesser, besteht das Problem, dass ein Nebenschluss zwischen den Rändern des Elektrodendrahtes und einem Bereich der Innenseite der Dosenzarge, der beabstandet zur gegenüberliegenden zweiten Kante des Blechzuschnittes liegt, auftreten kann. Dieser Nebenschluss tritt ein, weil der meist auf ein Verhältnis Breite zu Dicke von 2 bis 4 angewalzte und in einer Nut von der Tiefe, welche etwa die Hälfte der Drahtdicke aufweist, geführte Draht die Elektrodenrolle peripher im Bereich der zur erzeugenden Schweissnaht zu wenig überragt und die seitlichen Schultern der Schweissrolle aus technischen Gründen nur wenig radial zurückversetzt werden können und deshalb die Zarge ausserhalb des Überlappungsbereichs berühren können. Ein Teil des Stroms fliesst dann nicht durch den überlappten Bereich und führt somit zu einer schlecht geschweissten Dose, welche gerade im Aerosolbereich (die Dose ist dort ein Druckbehälter!) sogar zu einer potentiellen Gefahr für den Benutzer führen kann.

Aus der JP 11-188485 A ist eine Schweissrollenanordnung bekannt, bei der auf zylindrischen Kontaktflächen Zwischenelektrodendrähte mit rechteckigem Querschnitt geführt werden. Die Drähte weisen ein Breiten-DickenVerhältnis von ca. 2,5 auf, was den Nachteil hat, dass einerseits ein hoher Verbrauch an Kupfer bewirkt, und bei Gebinden mit geringem Durchmesser können seitlich von Quetschnähten Nebenflüsse entstehen.

Aus der JP 11-320175 A ist weiter eine Schweissanlage für Dosen bekannt, bei der auf den Oberflächen der Schweissrollen keine Zwischenelektrode geführt wird und bei der die innere Elektrode pombiert ist und die aussen liegende konkav ausgeführt ist, um sich an die Oberfläche der inneren anpassen zu können. Solche drahtlosen Schweissanlagen sind für das Schweissen von Weissblechdosen nicht einsetzbar. Zudem ist auf den Oberflächen der Schweissrollen nach kurzer Zeit eine von den Blechkanten bewirkte Verformung sichtbar.

Wie die vorgenannte japanische Schrift wird auch in der US 1,511,449 ein Schweissverfahren beschrieben, bei dem die innen liegende Elektrode eine gekrümmte Oberfläche aufweist und die aussen liegende gegengleich geformt ist, um eine möglichst grosse Auflage an den beiden zu verschweissenden Blechen zu erlangen. Sie weist die gleichen Nachteile auf, indem nämlich mit Schweisselektrodenrollen ohne Zwischenelektroden keine verzinnten Bleche schweissbar sind und zudem die Oberflächen der Elektrodenrollen einem sehr hohen Verschleiss unterworfen sind, welcher eine Massenproduktion verunmöglicht.

Eine Aufgabe der Erfindung besteht darin, eine Rollennaht-Schweissmaschine mit einer Elektrodenrolle zu schaffen, die mit einer kostengünstig herstellbaren Zwischenelektrode betrieben werden kann.

Eine weitere Aufgabe der vorliegenden Erfindung ist die Schaffung eines Verfahrens zum Rollennaht-Schweissen von Blechzargen, das die Kosten für die Drahtzwischenelektrode pro geschweissten Laufmeter Schweissnaht wesentlich senkt.

Eine weitere Aufgabe der Erfindung ist die Schaffung eines Verfahrens zum Schweissen von Blechzargen, bei dem der Nebenschluss zwischen der innenliegenden Elektrodenrolle und dem zu schweissenden Dosenkörper vermieden werden kann.

Gelöst werden diese Aufgaben durch eine Rollennaht-Rchweissmaschine gemäss den Merkmalen der Patentansprüche 1 und 3 sowie durch ein Verfahren zum Rollennahtschweissen gemäss den Merkmalen des Patentanspruchs 4.

Es gelingt durch die Verwendung eines gegenüber dem Stand der Technik nur einen 0,2 bis 0,3-fachen Querschnitt aufweisenden Elektrodendrahtes und durch Flachwalzen des letzteren bis ein Breiten-/Dickenverhältnis von 7 bis 10 die gestellten Aufgaben zu lösten. Die Verwendung einer Elektrodenrolle ohne periphere Nut bewirkt eine optimale Anlage des Elektrodendrahtes auf der Peripherie der Elektrodenrolle und dadurch optimale Stromübergänge bei kleinerer Stromdicht als bisher. Mit weniger als einem Drittel bzw. Viertel der bisher benötigten Kupferdrahtmenge und folglich auch entsprechend tieferen Drahtkosten können, sichere Schweissungen von hoher Qualität erlangt werden. Im weiteren gelingt es in einer besonders vorteilhaften Ausgestaltung der Erfindung, eine Elektrodenrolle zu verwenden, welche keine Führungsnut für den Draht benötigt. Eine geringe Bombierung der Oberfläche der Elektrodenrolle stellt sicher, dass die flachgewalzte, nun bandförmige Elektrode sich stets auf dem Scheitel der Rolle bewegt. Eine zusätzliche leicht gekrümmte Querschnittsform der flachgewalzten Drahtelektrode unterstützt deren Zentrierung auf dem Scheitel der Elektrodenrolle. Der flachgewalzte Draht kann auch von einer umlaufenden Rippe getragen werden, deren Breite kleiner ist als die Breite des Drahtes und einen Nebenschluss bei den kleinsten Zargendurchmessern ausschliesst.

Anhand illustrierter Ausführungsbeispiele wird die Erfindung näher erläutert. Es zeigen:
- Figur 1: eine schematische Darstellung einer Rollennaht-Widerstandsschweissmaschine und den Verlauf des Zwischenelektrodendrahtes,
- Figur 2a: eine Ansicht der beiden Elektrodenrollen aus Richtung Pfeil P mit herkömmlichen, in Nuten an den beiden Elektrodenrollen geführten Zwischenelektrodendrähten gemäss Figur 2b,
- Figur 2b: einen Querschnitt durch einen herkömmlichen Zwischenelektrodendraht,
- Figur 3a: einen Vertikalschnitt durch die beiden Elektrodenrollen mit einer erfindungsgemässen, über beiden Elektroden bandförmigen Zwischenelektrode,
- Figur 3b: einen Vertikalschnitt durch die beiden Elektrodenrollen mit einer erfindungsgemässen, über der innenliegenden Elektrodenrolle verlaufenden bandförmigen Zwischenelektrode,
- Figur 3c: einen Vertikalschnitt durch die beiden Elektrodenrollen mit einer erfindungsgemässen, über der innenliegenden Elektrodenrolle verlaufenden bandförmigen Zwischenelektrode in einer weiteren Ausgestaltung mit seitlichen Abkantungen,
- Figur 4: einen Querschnitt durch den Zwischenelektrodendraht, bei der Zuführung in die Schweissmaschine (Anlieferungszustand), grosser Durchmesser (d₀) bisher, kleiner Durchmesser (d₁) neu,
- Figur 5: einen Querschnitt durch die Drahtelektrode nach dem mindestens einmaligen Flachwalzen,
- Figur 6: eine weitere Ausgestaltung der Drahtelektrode nach dem Flachwalzen mit bogenförmigem Querschnitt,
- Figur 7a: eine weitere Ausgestaltung der Drahtelektrode nach dem Flachwalzen mit geknicktem Querschnitt,
- Figur 7b: eine Drahtelektrode mit elliptischem Querschnitt (Elliptik übertrieben dargestellt),

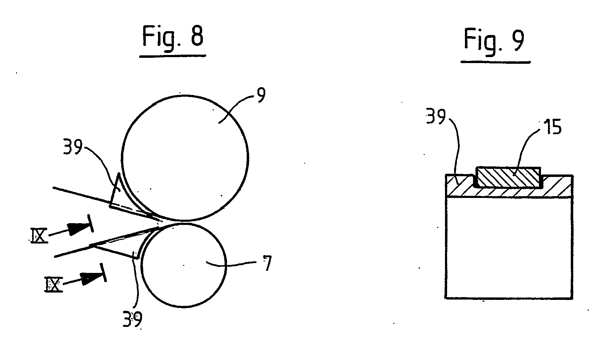

- Figur 8: eine Seitenansicht der beiden Elektrodenrollen mit Führungsteilen für den Elektrodendraht und
- Figur 9: einen Querschnitt längs Linie IX-IX in Figur 8 durch den Führungsteil zur unteren, ausserhalb der Dose liegenden Elektrodenrolle.

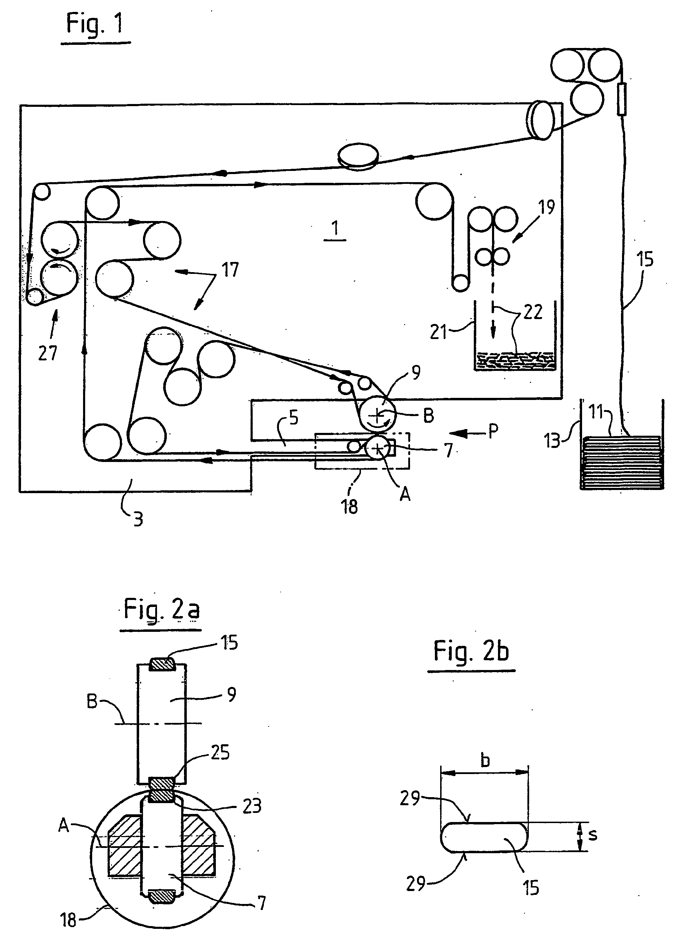

Die schematische Darstellung einer Rollennaht-Schweissmaschine 1 und der Drahtführung in Figur 1 umfasst, als Rechteck dargestellt, ein Schweissmaschinengehäuse 3 mit einem das Maschinengehäuse 3 seitlich überragenden Schweissarm 5, an dessen Ende die untere, innerhalb eines Blechzylinders 18 zu liegen kommende Elektrodenrolle 7 angebracht und auf einer Achse A drehbar gelagert ist. Oberhalb der unteren Schweisselektrode 7 ist die obere oder äussere Elektrodenrolle 9 sichtbar, welche auf einer Achse B drehbar gelagert ist. Auf der rechten Seite der Schweissmaschine 1 ist ein Drahtvorrat 11, in Gestalt eines in einen oben offenen Behälter 13 eingelegten Drahtcoils 13 sichtbar. Ein aus dem Drahtvorrat abgezogener Runddraht 15 wird, umgelenkt um mehrere Umlenkrollen 17, meistens zuerst zur oberen, ausserhalb des zu schweissenden Blechzylinders 18 liegenden Elektrodenrolle 9, dann wiederum um weitere Umlenkrollen 17 zur unteren Elektrodenrolle 7 und von dort zu einem Zerhacker 19 geführt, der den Draht in kleine Abschnitte 22 zerhackt und diese einem Behälter 21 zuführt. Die Abschnitte 22 werden zur Wiederaufbereitung an den Drahtlieferanten zurückgegeben. Falls der Draht 15 ein weiteres Mal benutzt werden soll, so tritt an die Stelle des Zerhackers 19 eine Spulvorrichtung (keine Abbildung).

Die vergrösserte Darstellung der beiden herkömmlichen Elektrodenrollen 7 und 9 in Figur 2 zeigt wiederum die gegenseitige Lage der beiden Drehachsen A und B sowie die herkömmliche Ausbildung der beiden Elektrodenrollen 7,9 mit je einem peripheren Einstich 23 in der unteren Elektrodenrolle 7 und einem peripheren Einstich 25 in der oberen Elektrodenrolle 9. In den Einstichen 23,25 ist weiter der als Zwischenelektrode dienende Draht 15 dargestellt. Dieser ist in einer aus mindestens zwei angetriebenen Walzen bestehenden Walzeinrichtung 27 derart angewalzt worden, damit er zwei sehnenartig verlaufende, parallel liegende Flachstellen 29 gemäss Figur 2b aufweist. Der heute gebräuchliche, anfänglich einen Durchmesser von z.B. 1,38mm und folglich einen Querschnitt von ca. 1,5mm² aufweisende Draht 15 weist nach dieser Verformung eine Breite b von ca. 2,1mm auf. Die Dicke s des Drahtes, d.h. der Abstand zwischen den beiden Abflachungen bzw. Sehnen 29, beträgt somit ca. 0,7 bis 0.75mm. Die beiden als Führungen dienenden peripheren Einstiche oder Nuten 23,25 in den Peripherien der Elektrodenrollen 7,9 weisen eine Breite auf, die etwas grösser ist als die Breite b des flachgewalzten Drahtes 15, damit dieser durch den Druck beim Schweissen darin nicht festklemmt.

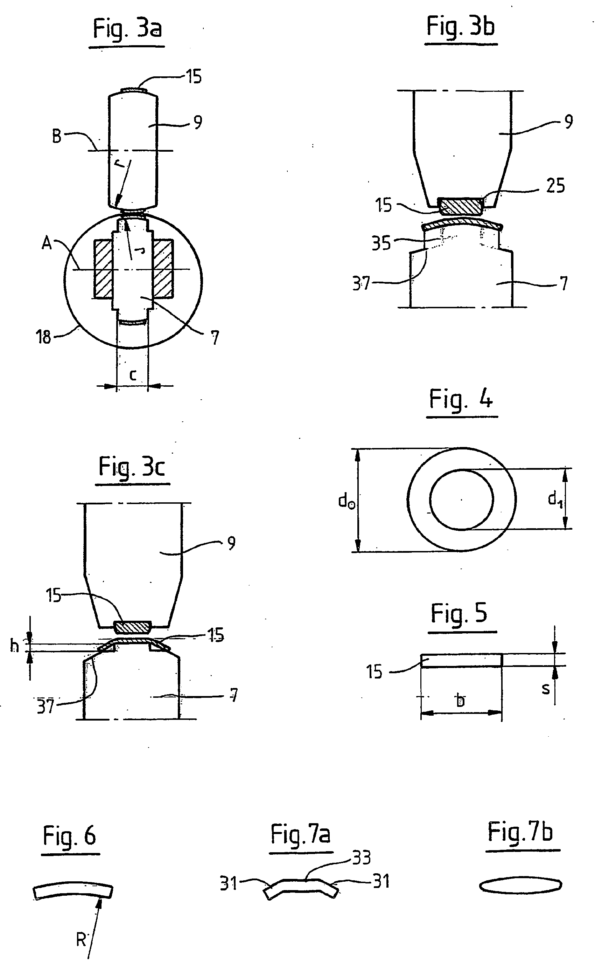

Die erfindungsgemässe Zwischenelektrode, wie sie in den Figuren 3a bis 3c und 5 bis 7 dargestellt ist, wird nicht nur angeplattet oder abgeflacht, sondern es wird aus einem Draht, dessen Ausgangsdurchmesser je nach Anwendung nur 0,6 bis 0,8mm statt 1,38mm aufweist, ein Band gewalzt mit einer Breite b von ca. 2mm und einer Dicke von nur noch 0,28 bis 0,3mm. Die für die Schweissung notwendige Breite b des Drahtes 15 wird mithin durch einen Draht möglich, dessen anfänglicher Querschnitt nur ca. 20% bis 30% eines bisher verwendeten Drahtes aufweist. Anders ausgedrückt: Es wird nur noch 20%- 30% Kupferdrahtmasse benötigt. Das folienartige Band deckt - wie bisher der Draht 15 - die in Kontakt mit dem Werkstück gelangenden Bereiche auf der Peripherie der beiden Elektrodenrollen 7,9 ab. Der foliendünn ausgewalzte Draht 15 kann direkt auf der Oberfläche, d.h. der Peripherie, der beiden Elektrodenrollen 7,9 umlaufen, ohne dass eine Nut für dessen Seitenführung zwingend ist. Eine minimale Krümmung, gemäß der Erfindung, der Peripherie der Elektrodenrollen 7,9 in axialer Richtung (vgl. Radius r in Figur 3a), begünstigt den Lauf des Drahtes 15 auf der Rollenperipherie. Der Draht 15 kann, wie Figur 5 zeigt, anfänglich völlig eben gewalzt sein oder, wie die Figuren 6, 7a und 7b zeigen, entweder quer zu seiner Längsrichtung mit einem Radius R versehen sein oder es können die beiden Randbereiche 31 bezüglich des zentralen Bereichs 33 in einem spitzen Winkel verlaufen oder eine elliptische Form aufweisen.

Wie in Figur 3a weiter ersichtlich kann die innere Elektrodenrolle 7 im Bereich von deren Peripherie, auf der der als Zwischenelektrode dienende flachgewalzte Draht 15 umläuft, wesentlich schmaler ausgebildet sein als bei herkömmlichen Elektrodenrollen, bei denen ein Einstich, d.h. eine umlaufende Nut zur Führung der Zwischenelektrode notwendig ist. Durch diese schmale Schulter von der Breite c können Nebenschlüsse mit der inneren Oberfläche der zu schweissenden Zarge, d.h. des Blechzylinders 18 vermieden werden.

In der weiteren Ausgestaltung der Erfindung gemäss Figur 3b ist die äussere, oben liegende Elektrodenrolle 9 herkömmlich ausgebildet, d.h. sie umfasst eine Nut 25, in der der Elektrodendraht 15 geführt ist und auch in herkömmlicher Weise nur eine geringfügige Abplattung aufweist, da die eingangs erklärte Nebenschluss-Gefahr bei der aussenliegenden Elektrodenrolle 9 nicht besteht. Das Flachwalzen des Drahtes 15 auf ein Breiten/DickenVerhältnis b/s erfolgt erst nach dem Durchgang des Drahtes 15 über die obere Elektrodenrolle 9 und vor dem Passieren der unteren Elektrodenrolle 7. Im Beispiel nach Figur 3b liegt der nun wiederum foliendünn ausgewalzte Draht 15 nicht mehr mit seiner gesamten Breite auf der Elektrodenrolle 7 auf, sondern an der Elektrodenrolle 7 ist eine umlaufende Rippe 35 ausgebildet. Die Schultern 37 auf der Peripherie der Rolle 7 liegen folglich zurückversetzt und es wird dadurch vermieden, dass eine der Schultern auch bei kleinen Blechzylinder-Durchmessern einen Nebenschluss erzeugen kann.

Eine weitere Ausgestaltung der Erfindung ist in Figur 3c dargestellt. Bei dieser ist wiederum, wie in beispielgemäss Figur 3b, der auf der aussenliegenden Elektrodenrolle 7 geführte Draht 15 in herkömmlicher Weise nur teilweise flachgewalzt, jedoch aus einem Draht 15 hergestellt, dessen Querschnitt nur 20-30% eines herkömmlich verwendeten entspricht. Auf der innenliegenden Elektrodenrolle 5 ist wiederum eine Rippe 35 ausgebildet, deren Höhe h jedoch viel geringer ist. Der flachgewalzte Draht 15 kann hier sogar an den seitlich der Rippe 35 liegenden Schultern 37 anliegen, ohne Nebenschluss zu erzeugen.

Hilfsweise können einlaufseitig zu den beiden Elektrodenrollen 5,7 Führungsschuhe 39 angeordnet sein, mit denen der mehr oder weniger stark abgeflachte Elektrodendraht 15 seitlich geführt auf die Peripherie der Elektrodenrollen 5,7 führbar ist.

## Patentansprüche

1. Rollennaht-Schweissmaschine mit zwei gegeneinander pressbaren Elektrodenrollen (7,9), umfassend weiter einen Draht (15) als Zwischenelektrode, welcher an der Schweissstelle (S) im Rollenspalt zwischen den Peripherien der aussen liegenden Elektrodenrolle (9) und der innen liegenden Elektrodenrolle (7) und den sich überlappenden Kanten eines zu einem Zylinder geformten Blechzuschnitts geführt wird, wobei die innen im Blechzylinder liegende Elektrodenrolle (7) eine nutlose Peripherie aufweist, auf der der Draht (15) aufliegt, **dadurch gekennzeichnet, dass** der die innen liegende Elektrodenrolle (7) kontaktierende Draht (15) ein Querschnitts-Verhältnis Breite/Dicke (b/s) von 5-10, vorzugsweise 8 aufweist, wobei mindestens die Peripherie der innenliegenden Elektrodenrolle (7) in axialer Richtung einen Radius (r) aufweist und dass die Breite (c) der Auflagefläche für den flachgewalzten Draht (15) auf der innenliegenden Elektrodenrolle (7) grösser ist als die Breite (b) des flachgewalzten Drahtes (15).

2. Rollennaht-Schweissmaschine nach Anspruch 1, **dadurch gekennzeichnet, dass** das Breiten/Dicken-Verhältnis (b/s) beim Kontaktieren beider Elektrodenrollen (7,9) zwischen 5-10 liegt.

3. Rollennaht-Schweissmaschine mit zwei gegeneinander pressbaren Elektrodenrollen (7,9), umfassend weiter einen Draht (15) als Zwischenelektrode, welcher an der Schweissstelle (S) im Rollenspalt zwischen den Peripherien der aussen liegenden Elektrodenrolle (9) und der innen liegenden Elektrodenrolle (7) und den sich überlappenden Kanten eines zu einem Zylinder geformten Blechzuschnitts geführt wird, wobei die innen im Blechzylinder liegende Elektrodenrolle (7) eine nutlose Peripherie aufweist, auf der der Draht (15) aufliegt, **dadurch gekennzeichnet, dass** mindestens die Peripherie der innenliegenden Elektrodenrolle (7) in axialer Richtung einen Radius (r) aufweist, wobei die Breite (c) der Auflagefläche für den flachgewalzten Draht (15) auf der innenliegenden Elektrodenrolle (7) kleiner ist als die Breite (b) des flachgewalzten Drahtes (15) und dass auf der Peripherie mindestens der innenliegenden Elektrodenrolle (7) eine Rippe (35) ausgebildet ist, auf deren Peripherie der flachgewalzte Draht (15) aufliegt.

4. Verfahren zum Rollennaht-Schweissen von Blechzargen (18) mit zwei gegeneinander pressbaren Elektrodenrollen (7,9), auf deren Peripherie im Bereich der Schweissstelle ein Draht (15) als Zwischenelektrode geführt wird, **dadurch gekennzeichnet, dass**
- der Draht (15) durch Walzen auf eine Dicke (s) flachgewalzt wird, bis das Verhältnis Breite (b) zu Dicke (s) zwischen 5 und 10 liegt,
- der so flachgewalzte Draht (15) über die beim Schweissen innerhalb der Blechzarge (18) liegende nut lose Elektrodenrolle (7) geführt wird, wobei deren Peripherie mindestens im Kontaktbereich mit dem Draht (15) eine Wölbung mit einem Wölbungsradius (r) aufweist.

5. Verfahren nach Anspruch 4, **dadurch gekennzeichnet, dass** der Draht (15) vor dem Kontaktieren der ausserhalb liegenden Elektrodenrolle (9) auf ein Breiten/Dicken-Verhältnis (b/s) von weniger 5 flach gewalzt und in herkömmlicher Weise in einer Nut (25) in der Peripherie der ausserhalb liegenden Elektrodenrolle (9) geführt wird und dass der Draht (15) vor dem Einlauf auf die innenliegende Elektrodenrolle (9) auf ein Breiten/Dicken-Verhältnis (b/s) von 6-10 flacher gewalzt wird.

6. Verfahren nach einem der Ansprüche 4 oder 5, **dadurch gekennzeichnet, dass** dem Draht (15) beim Walzen quer zu seiner Längsausdehnung eine Bogenform zugefügt wird, wobei der Bogenradius (R) grösser/gleich als der Wölbungsradiüs (r) der Peripherie der Elektrodenrollen (7,9) ist.

## Claims

1. A roll seam welding machine with two electrode rolls (7, 9) which may be pressed against one another, comprising further a wire (15) as an intermediate electrode, which at the welding location (S) is guided in the roll gap between the peripheries of the outer-lying electrode roll (9) and the inner-lying electrode roll (7) and the overlapping edges of a sheet-metal blank shaped into a cylinder, wherein the electrode roll (7) lying at the inside in the sheet-metal cylinder has a groove-less periphery, on which the wire (15) lies, **characterised in that** the wire (15) contacting the inner-lying electrode roll (7) has a cross-section ratio of width/thickness (b/s) of 5-10, preferably 8, wherein at least the periphery of the inner lying electrode roll (7) in the axial direction has a radius (r) and that the width (c) of the rest surface for the flatly rolled wire (15) on the inner-lying electrode roll (7) is larger than the width (b) of the flatly-rolled wire (15)

2. A roll seam welding machine according to claim 1, **characterised in that** the width/thickness ratio (b/s) on contacting both electrode rolls (7, 9) lies between 5-10.

3. A roll seam welding machine with two electrode rolls (7, 9) which may be pressed against one another, comprising further a wire (15) as an intermediate electrode, which at the welding location (S) is guided in the roll gap between the peripheries of the outer-lying electrode roll (9) and the inner-lying electrode roll (7) and the overlapping edges of a sheet-metal blank shaped into a cylinder, wherein the electrode roll (7) lying at the inside in the sheet-metal cylinder has a groove-less periphery, on which the wire (15) lies, **characterised in that** at least the periphery of the inner-lying electrode roll (7) in the axial direction has a radius (r), wherein the width (c) of the rest surface for the flatly rolled wire (15) on the inner-lying electrode roll (7) is smaller than the width (b) of the flatly rolled wire (15), and that a rib (35) is formed on the periphery at least of the inner-lying electrode roll (7), and the flatly rolled wire (15) lies on the periphery of this rib.

4. A method for roll seam welding of sheet-metal frames (18) with two electrode rolls (7, 9) which may be pressed against one another, on whose periphery in the region of the weld location a wire (15) is guided as an intermediate electrode, **characterised in that**
- the wire (15) is flatly rolled to a thickness (s) by way of rolling, until the ratio of the width (b) to the thickness (s) lies between 5 and 10,
- the wire (15) flatly rolled in such a manner is guided over the groove-less electrode roll (7), which on welding lies within the sheet-metal frame (18), wherein the periphery of this roll has a curvature with a curvature radius (r) at least in the contact region of the wire (15).

5. A method according to claim 4, **characterised in that** the wire (15) before the contacting of the electrode roll (9) lying outside, is flatly rolled to a width/thickness ratio (b/s) of less than 5 and in a conventional manner is guided in a groove (25) in the periphery of the electrode roll (9) lying outside, and that the wire (15) is rolled flatter to a width/thickness ratio (b/s) of 6-10, before the run-in onto the inner-lying electrode roll (9).

6. A method according to one of the claim 4 or 5, **characterised in that** an arch shape is added to the wire (15) on rolling transversely to its longitudinal extension, wherein the arch radius (R) is larger/equal to the curvature radius (r) of the periphery of the electrode rolls (7, 9).

## Revendications

1. Machine de soudage à la molette comprenant deux rouleaux à électrodes (7, 9) qui peuvent être pressés l'un contre l'autre, comportant en outre un fil métallique (15) comme électrode intermédiaire, lequel est guidé sur le point de soudage (S) dans la fente de rouleau entre les périphéries du rouleau à électrode (9) placé à l'extérieur et du rouleau à électrode (7) placé à l'intérieur et les arêtes en chevauchement d'une coupe de tôle conformée en un cylindre, dans laquelle le rouleau à électrode (7) placé à l'intérieur dans le cylindre en tôle présente une périphérie sans rainure sur laquelle le fil métallique (15) vient se placer, **caractérisée en ce que** le fil métallique (15) qui vient en contact avec le rouleau à électrode (7) placé à l'intérieur présente un rapport de section transversale largeur/épaisseur (b/s) de 5 à 10, de préférence 8, dans laquelle au moins la périphérie du rouleau à électrode (7) placé à l'intérieur présente un rayon (r) dans la direction axiale et **en ce que** la largeur (c) de la surface d'appui pour le fil métallique (15) laminé en plat sur le rouleau à électrode (7) placé à l'intérieur est plus grande que la largeur (b) du fil métallique (15) laminé en plat.

2. Machine de soudage à la molette selon la revendication 1, **caractérisée en ce que** le rapport de section transversale largeur/épaisseur (b/s) est compris entre 5 et 10 lors du contact des deux rouleaux à électrodes (7, 9).

3. Machine de soudage à la molette comprenant deux rouleaux à électrodes (7, 9) qui peuvent être pressés l'un contre l'autre, comportant en outre un fil métallique (15) comme électrode intermédiaire, lequel est guidé sur le point de soudage (S) dans la fente de rouleau entre les périphéries du rouleau à électrode (9) placé à l'extérieur et du rouleau à électrode (7) placé à l'intérieur et les arêtes en chevauchement d'une coupe de tôle conformée en un cylindre, dans laquelle le rouleau à électrode (7) placé à l'intérieur dans le cylindre en tôle présente une périphérie sans rainure sur laquelle le fil métallique (15) vient se placer, **caractérisée en ce qu'**au moins la périphérie du rouleau à électrode (7) placé à l'intérieur présente un rayon (r) dans la direction axiale, dans laquelle la largeur (c) de la surface d'appui pour le fil métallique (15) laminé en plat sur le rouleau à électrode (7) placé à l'intérieur est plus petite que la largeur (b) du fil métallique (15) laminé en plat, et **en ce que**, sur la périphérie au moins du rouleau à électrode (7) placé à l'intérieur, une nervure (35) est réalisée, le fil métallique (15) laminé en plat venant se placer sur la périphérie de ladite nervure.

4. Procédé pour le soudage à la molette des châssis de tôle (18) comprenant deux rouleaux à électrodes (7, 9) qui peuvent être pressés l'un contre l'autre, dans lequel un fil métallique (15) est guidé comme électrode intermédiaire dans la zone du point de soudage sur la périphérie desdits rouleaux, **caractérisé en ce que** :
- le fil métallique (15) est laminé en plat par des rouleaux à une épaisseur (s) jusqu'à ce que le rapport entre la largeur (b) et l'épaisseur (s) soit compris entre 5 et 10,
- le fil métallique (15) ainsi laminé en plat est guidé au-dessus du rouleau à électrode (7) placé à l'intérieur lors du soudage dans le châssis en tôle (18),
dans lequel sa périphérie sans rainure présente au moins dans la zone de contact avec le fil métallique (15) une courbure avec un rayon de courbure (r).

5. Procédé selon la revendication 4, **caractérisé en ce que** le fil métallique (15) est laminé en plat à un rapport largeur/épaisseur (b/s) inférieur à 5 avant de venir en contact avec le rouleau à électrode (9) placé à l'extérieur et **en ce qu'**il est guidé de la manière usuelle dans une rainure (25) dans la périphérie du rouleau à électrode (9) placé à l'extérieur et **en ce que** le fil métallique (15) est encore plus laminé en plat à un rapport largeur/épaisseur (b/s) de 6 à 10 avant d'arriver sur le rouleau à électrode (7) placé à l'intérieur.

6. Procédé selon l'une ou l'autre des revendications 4 et 5, **caractérisé en ce qu'**une forme de courbe est ajoutée au fil métallique (15) pendant le laminage perpendiculairement à son élongation longitudinale, dans lequel le rayon de courbure (R) est supérieur ou égal au rayon de courbure (r) de la périphérie des rouleaux à électrodes (7, 9).
